# EUROPEAN PATENT APPLICATION

(11) **EP 4 681 595 A1**
(43) Date of publication of application: **21.01.2026**
(21) Application number: 24769778.2
(22) Date of filing: 04.03.2024
(51) Int. Cl.: A47L 11/24, A47L 11/282, A47L 11/283, A47L 11/40

(54) **CONTROL METHOD AND APPARATUS FOR AUTOMATIC CLEANING DEVICE, AND AUTOMATIC CLEANING DEVICE AND STORAGE MEDIUM**

(30) Priority: 15.03.2023 CN 202310267204
(71) Applicant: Beijing Roborock Innovation Technology Co., Ltd., Beijing 102206 (CN)
(72) Inventor: SHAN, Jianqiang, Beijing 102206 (CN); WANG, Lei, Beijing 102206 (CN)
(74) Representative: Cabinet Beau de Loménie
(86) International application number: PCT/CN2024/079868
(87) International publication number: WO 2024/188084

(57) **Abstract**

A control method and apparatus for an automatic cleaning device (100), and an automatic cleaning device (100) and a storage medium. The automatic cleaning device (100) comprises a body (101) and a cleaning assembly (1031) arranged on the rear of the body (101), wherein the cleaning assembly (1031) at least partially protrudes from an outer edge of the body (101). The control method comprises: in the process of an automatic cleaning device (100) changing directions after moving into a preset range of an obstacle (300), executing a supplemental cleaning action once after each time the automatic cleaning device (100) rotates by a preset angle, until the automatic cleaning device (100) completes direction changing, wherein supplemental cleaning actions comprise a backward action and a forward action (S401) The automatic cleaning device (100) executes a supplemental cleaning action during turning, thereby increasing the area of cleaning coverage, reducing a cleaning-missing region, and improving the cleaning effect of the automatic cleaning device (100).

## Description

### CROSS-REFERENCE TO RELATED APPLICATION

The present disclosure claims priority to the Chinese Patent Application No. 202310267204.0, filed on March 15, 2023, which is incorporated herein by reference in its entirety as a part of the present disclosure.

### TECHNICAL FIELD

The present disclosure relates to the field of smart homes, and in particular to a method and apparatus for controlling an automatic cleaning device, the automatic cleaning device and a readable storage medium.

### BACKGROUND

At present, an automatic cleaning device, upon receiving a cleaning instruction, can automatically execute the cleaning instruction to complete the cleaning work, thereby reducing the labor cost and improving the cleaning efficiency. However, the automatic cleaning device in the related art may lead to a poor cleaning effect during cleaning.

### SUMMARY

In view of this, the present disclosure provides a method and apparatus for controlling an automatic cleaning device, the automatic cleaning device and a readable storage medium, which can increase the coverage of cleaning, reduce a missing cleaning area and improve a cleaning effect.

In a first aspect, an embodiment of the present disclosure provides a method for controlling an automatic cleaning device, where the automatic cleaning device includes a machine body and a cleaning assembly arranged at a rear of the machine body, at least part of the cleaning assembly protrudes from an outer edge of the machine body; and the method includes:
when the automatic cleaning device moves into a preset range of an obstacle and performs direction switching, performing a supplementary cleaning movement once after each rotation of the automatic cleaning device by a preset angle until the automatic cleaning device completes the direction switching, where the supplementary cleaning movement includes backward movement and forward movement.

In an embodiment of the present disclosure, the supplementary cleaning movement includes: controlling the automatic cleaning device to perform the backward movement from a first position and to stop when the automatic cleaning device reaches a second position corresponding to the obstacle, where the first position is a position where the automatic cleaning device is located after the automatic cleaning device rotates by the preset angle; and controlling the automatic cleaning device to perform the forward movement from the second position and to stop when the automatic cleaning device reaches the first position.

In an embodiment of the present disclosure, the supplementary cleaning movement further includes: controlling the automatic cleaning device to stop at the second position for a preset duration.

In an embodiment of the present disclosure, a method for determining that the automatic cleaning device reaches the second position includes: determining whether the automatic cleaning device reaches the second position based on a signal change of a driving component of the cleaning assembly, where the signal change occurs in the driving component when the cleaning assembly comes into contact with the obstacle.

In an embodiment of the present disclosure, the automatic cleaning device is provided with a sensing apparatus; and a method for determining that the automatic cleaning device reaches the second position includes: determining whether the automatic cleaning device reaches the second position based on a sensing signal of the sensing apparatus, where the sensing apparatus includes at least one of a ranging sensor, a collision sensor and an acceleration sensor.

In an embodiment of the present disclosure, controlling the automatic cleaning device to perform the forward movement from the second position and to stop when the automatic cleaning device reaches the first position includes: controlling the automatic cleaning device to perform the forward movement from the second position along a path of the backward movement and to stop when the automatic cleaning device reaches the first position.

In an embodiment of the present disclosure, the method further includes: determining a magnitude of the preset angle based on a cleanliness grade of the automatic cleaning device for the preset range of the obstacle, where the higher the cleanliness grade is, the smaller the preset angle is.

In a second aspect, an embodiment of the present disclosure provides an apparatus for controlling an automatic cleaning device, where the automatic cleaning device includes a machine body and a cleaning assembly arranged at a rear of the machine body, at least part of the cleaning assembly protrudes from an outer edge of the machine body; and the apparatus includes:
a control module configured to control, when the automatic cleaning device moves into a preset range of an obstacle and performs direction switching, the automatic cleaning device to perform supplementary cleaning movement once after each rotation of the automatic cleaning device by a preset angle until the automatic cleaning device completes the direction switching, where the supplementary cleaning movement includes backward movement and forward movement.

In an embodiment of the present disclosure, the supplementary cleaning movement performed by the automatic cleaning device under control of the control module includes: controlling the automatic cleaning device to perform the backward movement from a first position and to stop when the automatic cleaning device reaches a second position corresponding to the obstacle, where the first position is a position where the automatic cleaning device is located after the automatic cleaning device rotates by the preset angle; and controlling the automatic cleaning device to perform the forward movement from the second position and to stop when the automatic cleaning device reaches the first position.

In an embodiment of the present disclosure, the supplementary cleaning movement performed by the automatic cleaning device under the control of the control module further includes: controlling the automatic cleaning device to stop at the second position for a preset duration.

In an embodiment of the present disclosure, a method for determining, by the control module, that the automatic cleaning device reaches the second position includes: determining whether the automatic cleaning device reaches the second position based on a signal change of a driving component of the cleaning assembly, where the signal changes occurs in the driving component when the cleaning assembly comes into contact with the obstacle.

In an embodiment of the present disclosure, the automatic cleaning device is provided with a sensing apparatus; and a method for determining, by the control module, that the automatic cleaning device reaches the second position includes: determining whether the automatic cleaning device reaches the second position based on a sensing signal of the sensing apparatus, where the sensing apparatus includes at least one of a ranging sensor, a collision sensor and an acceleration sensor.

In a third aspect, an embodiment of the present disclosure provides an automatic cleaning device. The automatic cleaning device:
a machine body;
a cleaning assembly, arranged at a rear of the machine body, at least part of the cleaning assembly protrudes from an outer edge of the machine body;
a memory, arranged on the machine body, where the memory stores a program or an instruction; and
a processor, arranged on the machine body, where the processor, when executing the program or the instruction, implements the steps of the method as described in the first aspect.

In an embodiment of the present disclosure, the cleaning assembly includes at least one cleaning element rotatable relative to the machine body, and at least part of the cleaning element protrudes from the outer edge of the machine body.

In an embodiment of the present disclosure, the cleaning element includes two cleaning elements, and the two cleaning elements are arranged left and right in an advancing direction of the machine body.

In a fourth aspect, an embodiment of the present disclosure provides a readable storage medium. The readable storage medium stores a program or an instruction, and the program or instruction, when executed by a processor, implements the steps of the method as described in the first aspect.

In a fifth aspect, an embodiment of the present disclosure provides a chip. The chip includes a processor and a communication interface, where the communication interface is coupled to the processor, and the processor is configured to run a program or an instruction to implement the method as described in the first aspect.

In a sixth aspect, an embodiment of the present disclosure provides a computer program product. The program product is stored in a storage medium, and the program product, when executed by at least one processor, causes the processor to implement the method as described in the first aspect.

In the embodiments of the present disclosure, the automatic cleaning device is controlled to perform the cleaning work based on a cleaning instruction, and the cleaning instruction at least includes information such as a cleaning path and a cleaning mode. When the automatic cleaning device runs to be within the preset range of the obstacle, i.e., is close to the obstacle, the automatic cleaning device may perform direction switching to avoid from colliding with the obstacle. The automatic cleaning device, when rotating by a preset angle in the process of performing the direction switching, is controlled to perform the supplementary cleaning movement once, which is repeated for many times until the automatic cleaning device rotates to a target angle, thereby completing the direction switching. The supplementary cleaning movement refers to the backward movement and the forward movement that are sequentially performed by the automatic cleaning device.

According to the embodiments of the present disclosure, the automatic cleaning device performs a supplementary cleaning action when making a turn, so that the coverage of cleaning is increased, a missing cleaning area is reduced, and the cleaning effect of the automatic cleaning device is improved.

The above descriptions are only an overview of the technical solutions of the present disclosure, which can be implemented according to the contents of the description in order to understand the technical means of the present disclosure more clearly. In order to make the above and other objectives, features and advantages of the present disclosure be more obvious and understandable, specific implementations of the present disclosure are listed below.

### BRIEF DESCRIPTION OF THE DRAWINGS

The accompanying drawings described herein are used to provide a further understanding of the present disclosure and constitute a part of the present disclosure. The exemplary embodiments of the present disclosure and their descriptions are intended to explain the present disclosure and do not constitute undue limitations to the present disclosure. In the drawings:
FIG. 1 is a structural diagram of an automatic cleaning device according to an embodiment of the present disclosure;
FIG. 2 is a schematic diagram I of sweeping of the automatic cleaning device according to an embodiment of the present disclosure;
FIG. 3 is a schematic diagram II of sweeping of the automatic cleaning device according to an embodiment of the present disclosure;
FIG. 4 is a schematic flowchart I of a method for controlling an automatic cleaning device according to an embodiment of the present disclosure;
FIG. 5 is a schematic diagram I of turning of the automatic cleaning device according to an embodiment of the present disclosure;
FIG. 6 is a schematic diagram II of turning of the automatic cleaning device according to an embodiment of the present disclosure;
FIG. 7 is a schematic flowchart I of a method for controlling an automatic cleaning device according to an embodiment of the present disclosure; and
FIG. 8 is a structural block diagram of an apparatus for controlling an automatic cleaning device according to an embodiment of the present disclosure.

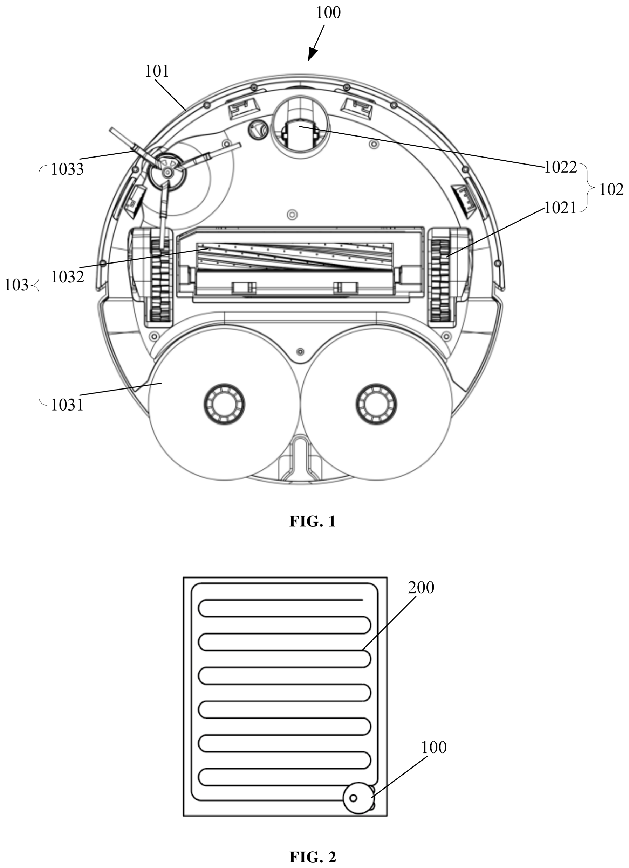

Corresponding relationships between reference numerals and names of components in FIGs. 1 to 6 are described as below:
100-automatic cleaning device, 200-zigzag course, 300-obstacle, 101-machine body, 102-driving system, 1021-driving wheel assembly, 1022-driven wheel, 103-cleaning system, 1031-cleaning assembly, 1032-rolling brush, and 1033-side brush.

### DETAILED DESCRIPTION

The technical solutions in the embodiments of the present disclosure will be clearly described below with reference to the accompanying drawings in the embodiments of the present disclosure. Apparently, the described embodiments are only some, but not all of the embodiments of the present disclosure. All other embodiments acquired by those of ordinary skills in the art based on the embodiments in the present disclosure are within the protection scope of the present disclosure.

The terms "first", "second" and the like in the description and claims of the present disclosure are used for the purpose of distinguishing similar objects instead of indicating a particular order or sequence. It should be understood that data used in this way are interchangeable where appropriate, such that the embodiments of the present disclosure described herein can be implemented in a sequence other than those illustrated or described herein. In addition, the objects distinguished by "first", "second" and the like are usually of the same type, and the number of the objects is not limited. For example, there may be one first object, or a plurality of first objects. In addition, the term "and/or" in the description and claims indicates at least one of the connected objects, and the character "/" generally indicates an "or" relationship between the contextual objects.

In the following, a method and apparatus for controlling an automatic cleaning device, the automatic cleaning device and a readable storage medium according to the embodiments of the present disclosure will be described in detail through specific embodiments and application scenarios thereof with reference to the accompanying drawings.

An embodiment of the present disclosure provides an automatic cleaning device. The automatic cleaning device may be a sweeping robot, a mopping robot, a sweeping and mopping integrated machine and the like. For ease of description, the technical solutions of the present disclosure will be described by taking the sweeping and mopping integrated machine as an example. FIG. 1 shows a structural diagram of an automatic cleaning device according to an embodiment of the present disclosure. The automatic cleaning device 100 includes a machine body 101. The machine body 101 is a mobile platform, which may be an autonomous mobile platform or a non-autonomous mobile platform. The autonomous mobile platform means that the mobile platform itself can automatically and adaptively make operational decisions based on unexpected environmental inputs, while the non-autonomous mobile platform itself cannot adaptively make operational decisions based on unexpected environmental inputs, but can execute established programs or run based on a certain logic.

The machine body 101 is provided with a driving system 102. The driving system 102 includes a driving wheel assembly 1021 and a driven wheel 1022. The driving wheel assembly 1021 and the driven wheel 1022 are manipulated based on a specific distance and angle information to implement traveling and steering of the automatic cleaning device.

The machine body 101 is also provided with a cleaning system 103. The cleaning system 103 includes a cleaning assembly 1031. At least part of the cleaning assembly 1031 is located outside an edge projection area of the machine body 101, i.e., at least part of the cleaning assembly 1031 protrudes from the machine body 101, so that a cleaning range of the cleaning assembly 1031 may extend beyond an edge of a traveling range of the machine body 101, thereby enabling comprehensive cleaning of edge and corner positions to which the machine body cannot fit, thereby expanding the cleaning range and improving the cleaning effect of the automatic cleaning device.

The cleaning system 103 further includes a liquid storage tank (not shown). The cleaning assembly 1031 may be arranged below the liquid storage tank. A cleaning liquid inside the liquid storage tank is transmitted to the cleaning assembly 1031 to cause the cleaning assembly 1031 to clean a plane to be cleaned. The cleaning liquid inside the liquid storage tank may also be directly sprayed onto the plane to be cleaned. By uniformly spreading the cleaning liquid, the cleaning assembly 1031 cleans the plane to be cleaned.

In some embodiments, the cleaning assembly 1031 includes at least one cleaning element rotatable relative to the machine body 101. The cleaning element may typically be a water-absorbing flexible substance, such as a fabric or sponge. In the present disclosure, the cleaning element may be at least one rotating turntable, water in the liquid storage tank of the automatic cleaning device is guided to the cleaning element, and the wetted cleaning element removes stains on the ground by rotational movement. Specifically, as shown in FIG. 1, the cleaning elements are two turntables, and the two turntables are arranged left and right in an advancing direction of the machine body.

It should be noted that the cleaning system 103 further includes a movement mechanism. The whole cleaning assembly 1031 may be installed on the machine body by means of the movement mechanism. The cleaning assembly 1031 moves with the movement of the machine body to achieve mopping and sweeping functions. The movement mechanism is configured to drive the cleaning element to act. For example, the movement mechanism may drive the cleaning element to rise and fall, and the movement mechanism may also drive the cleaning element to rotate. Therefore, according to the demand as to whether the cleaning element is in contact with a surface to be cleaned, rising, falling and rotating operations of the cleaning element can be implemented through the movement mechanism to meet different functional requirements of the cleaning element. It should be noted that the movement mechanism drives the cleaning element to perform the rotating operation when the cleaning element interferes with the surface to be cleaned for a mopping operation.

In some embodiments, the cleaning system 103 further includes a rolling brush 1032. The rolling brush 1032 having certain interference with the ground sweeps up garbage on the ground and sucks the garbage into a dust box. The cleaning system 103 further includes a side brush 1033 having a rotating axis. The rotating axis is angled relative to the ground for moving debris into a rolling brush area.

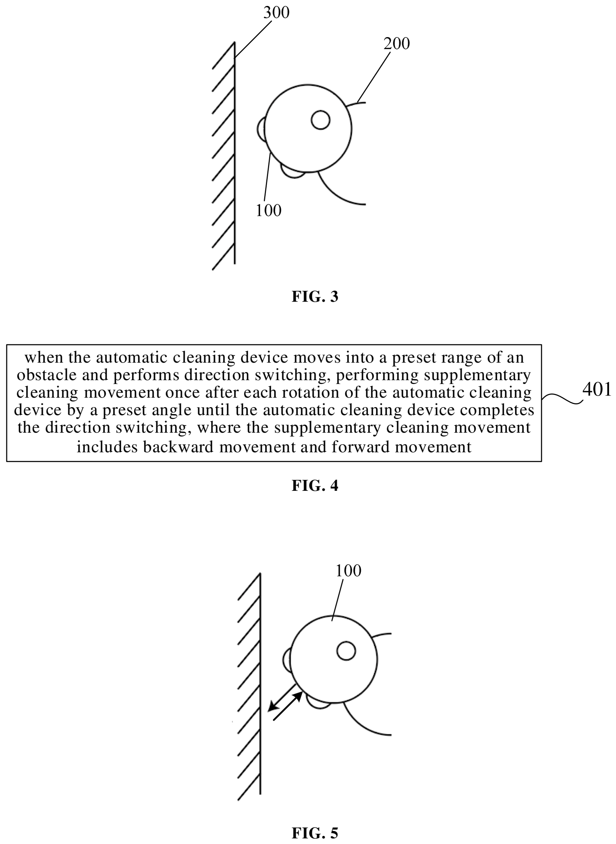

However, cleaning blind spots tend to occur when the automatic cleaning device makes a turn in the process of sweeping. As shown in FIG. 2, the automatic cleaning device 100 performs cleaning along a zigzag course 200. When it is necessary to switch to an adjacent line after completing sweeping of a current line, the automatic cleaning device performs a turning action as shown in FIG. 3. During turning, there is an area near the obstacle (e.g., a wall surface 300) that cannot be covered by the automatic cleaning device, i.e., a missing cleaning area, thereby reducing the cleaning effect of the automatic cleaning device.

Therefore, an embodiment of the present disclosure provides a method for controlling an automatic cleaning device. As shown in FIG. 4, the method includes the following steps.

In step 401, when the automatic cleaning device moves into a preset range of an obstacle and performs direction switching, supplementary cleaning movement is performed once after each rotation of the automatic cleaning device by a preset angle until the automatic cleaning device completes the direction switching, where the supplementary cleaning movement includes backward movement and forward movement.

In this embodiment, the automatic cleaning device is controlled to perform the cleaning work based on a cleaning instruction, the cleaning instruction at least including information such as a cleaning path and a cleaning mode. When the automatic cleaning device runs to be within the preset range of the obstacle, i.e., is close to the obstacle, the automatic cleaning device may perform direction switching to avoid from colliding with the obstacle. The automatic cleaning device, when rotating by a preset angle in the process of performing the direction switching, is controlled to perform supplementary cleaning movement once, which is repeated for many times until the automatic cleaning device rotates to a target angle, thus completing the direction switching.

The supplementary cleaning movement refers to the backward movement and the forward movement that are sequentially performed by the automatic cleaning device. By way of example, as shown in FIG. 5, the automatic cleaning device 100 first performs the backward movement in a backward arrow direction, and then performs the forward movement in a forward arrow direction. Moreover, in at least one of the two processes of backward movement and forward movement, the cleaning assembly performs the cleaning work.

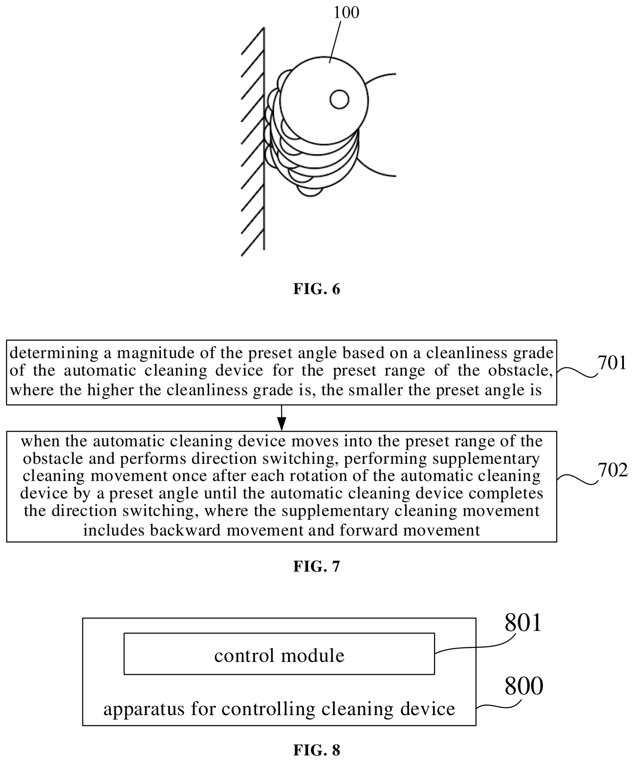

As shown in FIG. 6, the automatic cleaning device 100 continuously performs backward and forward movements for many times in the process of making a turn until the turning is completed, so that the original missing cleaning area within the preset range of the obstacle may also be covered by the cleaning assembly to implement sweeping of this area.

It should be noted that the target angle corresponding to the direction switching is not limited, and may be 90 degrees, 180 degrees, etc. The preset angle of each rotation of the automatic cleaning device is smaller than the target angle and may be determined based on the target angle or set by a user. For example, in a scene where the automatic cleaning device performs sweeping along the zigzag course, the automatic cleaning device needs to make a 180-degree turn in the process of switching to an adjacent line for sweeping when completing sweeping of a current line. In the process of making a turn, backward and forward actions are executed once every rotation by 30 degrees. Rotation and backward and forward actions are repeated for many times until the 180-degree turning is completed, so as to sweep areas near obstacles such as walls and furniture. For example, in a scene where the automatic cleaning device sweeps a 90-degree corner, the backward and forward actions are performed once every rotation by 15 degrees in the process of making a turn, and rotation and backward and forward actions are repeated for many times until the 90-degree turning is completed, so as to implement sweeping of an area near the corner.

According to the embodiments of the present disclosure, the automatic cleaning device performs a supplementary cleaning action when making a turn, so that the coverage of cleaning is increased, a missing cleaning area is reduced, and the cleaning effect of the automatic cleaning device is improved.

In an embodiment of the present disclosure, the supplementary cleaning movement includes: controlling the automatic cleaning device to perform the backward movement from a first position and to stop when the automatic cleaning device reaches a second position corresponding to the obstacle, where the first position is a position where the automatic cleaning device is located after the automatic cleaning device rotates by the preset angle; and controlling the automatic cleaning device to perform the forward movement from the second position and to stop when the automatic cleaning device reaches the first position.

In this embodiment, after the automatic cleaning device rotates by the preset angle, a position of the automatic cleaning device at the moment is recorded as the first position, and then the automatic cleaning device starts to move backward from the first position and stops when moving backward to the second position. The second position is a position of the obstacle or a position having a preset distance away from the obstacle. Further, the automatic cleaning device is controlled to move forward from the second position, to stop when moving back to the first position, and then to continue to perform rotational movement.

The above actions are repeated for many times to implement supplementary cleaning of the area near the obstacle and to reduce the missing cleaning area.

In an embodiment of the present disclosure, the supplementary cleaning movement further includes: controlling the automatic cleaning device to stop at the second position for a preset duration.

In this embodiment, when retreating to the second position, the automatic cleaning device may stay at the second position for a preset duration to increase the cleaning time near the obstacle, thereby achieving deep cleaning near the obstacle.

It should be noted that the preset duration for staying at the second position may be a set fixed duration, or may be determined based on the cleanliness grade within the preset range of the obstacle. For example, the higher the cleanliness grade is, the higher the required degree of cleanliness near the obstacle is, and the longer the preset duration is. The cleanliness grade may be set by the user or obtained by recognizing, via the automatic cleaning device, the dirtiness within the preset range of the obstacle. When set by the user, the cleanliness grade may be set manually by the user via a man-machine interaction system of the automatic cleaning device, or may be set by the user via a terminal and then transmitted to the automatic cleaning device.

In an embodiment of the present disclosure, whether the retreating action of the automatic cleaning device is in place (i.e., whether the second position is reached) may be determined in any of the following ways.
(1) Whether the automatic cleaning device reaches the second position is determined based on a signal change of a driving component of the cleaning assembly. The signal change occurs in the driving component when the cleaning assembly comes into contact with the obstacle.

Since at least part of the cleaning assembly placed at the rear of the machine body protrudes from the outer edge of the machine body, the cleaning assembly may first be in contact with the obstacle when the automatic cleaning device retreats. At the moment, an electric current of the driving component (e.g., a motor) of a movement mechanism that drives the cleaning assembly to rotate may be increased. Therefore, whether the automatic cleaning device retreats in place may be determined by determining whether the signal change occurs in the driving component.

(2) Whether the automatic cleaning device reaches the second position is determined based on a sensing signal of the sensing apparatus of the automatic cleaning device. The sensing apparatus includes at least one of a ranging sensor, a collision sensor and an acceleration sensor.

The determination as to whether to retreat in place is implemented by means of detecting via the sensing apparatus. For example, when the sensing apparatus is a ranging sensor, the ranging sensor is configured to detect a distance between the automatic cleaning device and the obstacle in the process of retreating. When this distance is equal to or less than a preset distance threshold, it indicates that the automatic cleaning device and the obstacle are too close and are about to come into contact with each other. At the moment, it is believed that the automatic cleaning device retreats in place, and the automatic cleaning device is controlled to stop. When the sensing apparatus is a collision sensor, the collision sensor is configured to detect whether the automatic cleaning device comes into contact with the obstacle; upon detection of a contact between the automatic cleaning device and the obstacle, it is believed that the automatic cleaning device has retreated in place; and then the automatic cleaning device is controlled to stop. When the sensing apparatus is an acceleration sensor, the acceleration sensor is configured to detect an acceleration of the automatic cleaning device; upon detection of a contact between the automatic cleaning device and the obstacle, the automatic cleaning device may stop running; and at the moment, when the acceleration sensor detects that the acceleration of the automatic cleaning device is 0, it is believed that the automatic cleaning device has retreated in place.

It should be noted that in order to ensure more accurate determination as to whether the retreating action is in place, it is also possible to make a judgment in the above two ways.

By the above ways, whether the automatic cleaning device retreats in place can be accurately identified, which, on the one hand, ensures that the automatic cleaning device accurately retreats to the second position and improves the cleaning effect on an area near the obstacle, and on the other hand, prevents the automatic cleaning device from retreating excessively, which may cause damage to the obstacles such as furniture and walls.

In an embodiment of the present disclosure, controlling the automatic cleaning device to perform the forward movement from the second position and to stop when the automatic cleaning device reaches the first position includes: controlling the automatic cleaning device to perform the forward movement from the second position along a path of the backward movement and to stop when the automatic cleaning device reaches the first position.

In this embodiment, when the automatic cleaning device retreats, a movement path from the first position to the second position may be recorded. When the forward movement is required, the automatic cleaning device may return the same way to the first position along the movement path, stop after reaching the first position, and then continue to perform the rotational movement.

By the above ways, it can be ensured that the automatic cleaning device may advance the same way after retreating, so as to continue to perform rotational movement and finally implement supplementary cleaning of an area near the obstacle.

As a refinement and extension of the above embodiments, an embodiment of the present disclosure provides another method for controlling an automatic cleaning device. As shown in FIG. 7, the method includes:
step 701: determining a magnitude of a preset angle based on a cleanliness grade of the automatic cleaning device for a preset range of an obstacle, where the higher the cleanliness grade is, the smaller the preset angle is; and
step 702, when the automatic cleaning device runs to be within the preset range of the obstacle and performs direction switching, performing supplementary cleaning movement once after each rotation of the automatic cleaning device by the preset angle until the automatic cleaning device completes the direction switching, where the supplementary cleaning movement includes backward movement and forward movement.

In this embodiment, the preset angle of each rotation of the automatic cleaning device is determined. Specifically, the preset angle is determined based on the target angle of direction switching and the cleanliness grade within the preset range of the obstacle. The higher the cleanliness grade is, the higher the dirtiness near the obstacle is, the higher the required cleanliness grade is, and the smaller the preset angle is. For example, in the case where the target angle is 180 degrees, when the cleanliness grade within the preset range of the obstacle is low, the preset angle may be set to 60 degrees, and the automatic cleaning device may perform three times of supplementary cleaning movement; and when the cleanliness grade within the preset range of the obstacle is high, the preset angle may be set to 30 degrees, and the automatic cleaning device may perform six times of supplementary cleaning movement. A small angle of rotation of the automatic cleaning device each time enables better coverage of the area near the obstacle by the cleaning assembly after the automatic cleaning device retreats, and also enables the cleaning assembly to repeatedly clean the area near the obstacle, thereby ensuring the cleaning effect on an area near the obstacle with high dirtiness.

As a specific implementation of the method for controlling the automatic cleaning device described above, an embodiment of the present disclosure provides an apparatus for controlling an automatic cleaning device. The automatic cleaning device includes a machine body and a cleaning assembly arranged at the rear of the machine body, and at least part of the cleaning assembly protrudes from an outer edge of the machine body. As shown in FIG. 8, an apparatus 800 for controlling an automatic cleaning device includes a control module 801. The control module 801 is configured to perform, when the automatic cleaning device moves into a preset range of an obstacle and performs direction switching, supplementary cleaning movement once after each rotation of the automatic cleaning device by a preset angle until the automatic cleaning device completes the direction switching. The supplementary cleaning movement includes backward movement and forward movement.

In this embodiment, the automatic cleaning device is controlled to perform cleaning work based on a cleaning instruction, and the cleaning instruction at least includes information such as a cleaning path and a cleaning mode. When the automatic cleaning device runs to be within the preset range of the obstacle, i.e., is close to the obstacle, the automatic cleaning device may perform direction switching to avoid from colliding with the obstacle. The automatic cleaning device, when rotating by a preset angle during the direction switching, is controlled to perform supplementary cleaning movement once, which is repeated for many times until the automatic cleaning device rotates to a target angle, thus completing the direction switching.

The supplementary cleaning movement refers to the backward movement and the forward movement that are sequentially performed by the automatic cleaning device. Moreover, in at least one of the two processes of backward movement and forward movement, the cleaning assembly performs cleaning work.

According to the embodiments of the present disclosure, the automatic cleaning device performs a supplementary cleaning action when making a turn, so that the coverage of cleaning is increased, a missing cleaning area is reduced, and the cleaning effect of the automatic cleaning device is improved.

Further, the supplementary cleaning movement performed by the control module 801 includes: controlling the automatic cleaning device to perform the backward movement from a first position and to stop when the automatic cleaning device reaches a second position corresponding to the obstacle, where the first position is a position where the automatic cleaning device is located after the automatic cleaning device rotates by the preset angle; and controlling the automatic cleaning device to perform the forward movement from the second position and to stop when the automatic cleaning device reaches the first position.

Further, the supplementary cleaning movement performed by the control module 801 further includes: controlling the automatic cleaning device to stop at the second position for a preset duration.

Further, a method for determining, by the control module 801, that the automatic cleaning device reaches the second position includes: determining whether the automatic cleaning device reaches the second position based on a signal change of a driving component of the cleaning assembly, where the signal change occurs in the driving component when the cleaning assembly comes into contact with the obstacle.

Further, the automatic cleaning device is provided with a sensing apparatus. A method for determining, by the control module 801, that the automatic cleaning device reaches the second position includes: determining whether the automatic cleaning device reaches the second position based on a sensing signal of the sensing apparatus, where the sensing apparatus includes at least one of a ranging sensor, a collision sensor and an acceleration sensor.

Further, controlling, by the control module 801, the automatic cleaning device to perform the forward movement from the second position and to stop when the automatic cleaning device reaches the first position includes: controlling the automatic cleaning device to perform the forward movement from the second position along a path of the backward movement and to stop when the automatic cleaning device reaches the first position.

Further, the control module 801 is also configured to determine a magnitude of the preset angle based on a cleanliness grade of the automatic cleaning device for the preset range of the obstacle. The higher the cleanliness grade is, the smaller the preset angle is.

In an embodiment of the present disclosure, the control apparatus 800 of the automatic cleaning device may be a component in the automatic cleaning device, such as an integrated circuit or a chip.

The control apparatus 800 of the automatic cleaning device according to the embodiment of the present disclosure may implement various processes implemented in the embodiments of the method for controlling the automatic cleaning device in FIG. 4, which will not be repeated herein to avoid repetition.

An embodiment of the present disclosure further provides an automatic cleaning device. As shown in FIG. 1, the automatic cleaning device includes:
a machine body 101;
a cleaning assembly 1031, arranged at the rear of the machine body 101, and at least part of the cleaning assembly 1031 protrudes from an outer edge of the machine body 101;
a memory (not shown), arranged on the machine body 101, the memory storing a program or an instruction; and
a processor (not shown), arranged on the machine body 101, where the processor, when executing the program or instruction, implements all the steps in the embodiments of the method for controlling the automatic cleaning device, and can achieve the same technical effect, which will not be repeated herein to avoid repetition.

The memory may be configured to store a software program and various data. The memory may mainly include a first storage area for storing the program or instruction and a second storage area for storing the data. The first storage area may store an operating system, an application program or instruction required by at least one function (e.g., a sound playback function or an image playback function), etc. Further, the memory may include a volatile memory or a nonvolatile memory, or the memory may include both of a volatile memory and a nonvolatile memory. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), a Static RAM (SRAM), a Dynamic RAM (DRAM), a Synchronous DRAM (SDRAM), a Double Data Rate SDRAM (DDRSDRAM), an Enhanced SDRAM (ESDRAM), a Synch Link DRAM (SLDRAM) and a Direct Rambus RAM (DRRAM). The memory in the embodiment of the present disclosure includes, but is not limited to, these and any other suitable types of memories.

The processor may include one or more processing units. Optionally, the processor integrates an application processor and a modem processor. The application processor is mainly configured to process operations involving an operating system, a user interface, an application program, etc. The modem processor is mainly configured to process a wireless communication signal, and is for example a baseband processor. It can be understood that the modem processor described above may not be integrated into the processor.

In an embodiment of the present disclosure, the cleaning assembly includes at least one cleaning element rotatable relative to the machine body, and at least part of the cleaning element protrudes from the outer edge of the machine body.

In an embodiment of the present disclosure, the cleaning element includes two cleaning elements. The two cleaning elements are arranged left and right in an advancing direction of the machine body.

By the above ways, a cleaning range of the cleaning assembly can extend beyond an edge of a traveling range of the machine body, thereby enabling comprehensive cleaning of edge and corner positions to which the machine body cannot fit, thereby expanding the cleaning range and improving the cleaning effect of the automatic cleaning device.

An embodiment of the present disclosure further provides a readable storage medium. The readable storage medium stores a program or an instruction, and the program or instruction, when executed by a processor, causing the processor to implement all the processes in the embodiments of the method for controlling the automatic cleaning device as described above, and to achieve the same technical effect, which will not be repeated herein to avoid repetition.

An embodiment of the present disclosure further provides a chip. The chip includes a processor and a communication interface. The communication interface is coupled to the processor. The processor is configured to run a program or an instruction to implement all the processes in the embodiments of the method for controlling the automatic cleaning device, and to achieve the same technical effect, which will not be repeated herein to avoid repetition.

It should be understood that the chip mentioned in the embodiment of the present disclosure may also be referred to as a system-level chip, a system chip, a chip system or a system-on-chip, etc.

An embodiment of the present disclosure further provides a computer program product. The program product is stored in a storage medium. The program product, when executed by at least one processor, causes the processor to implement all the processes in the embodiments of the method for controlling the automatic cleaning device as described above, and to achieve the same technical effect, which will not be repeated herein to avoid repetition.

It should be noted that, the terms "including", "containing", or any other variants thereof are intended to cover the nonexclusive inclusion, such that a process, method, article or apparatus including a series of elements includes not only those elements, but also other elements not listed explicitly or elements inherent to such a process, method, article or apparatus. Without more limitations, the element defined by the phrase "including a ..." does not exclude the existence of other same elements in the process, method, article or apparatus including this element. In addition, it should be pointed out that the scopes of the methods and apparatuses in the implementations of the present disclosure are not limited to performing functions in the order shown or discussed, but also can include performing functions in a substantially simultaneous manner or in a reverse order based on the functions involved. For example, the described methods can be performed in a different order from that described, and various steps can be added, omitted, or combined. In addition, features described with reference to some examples can be combined in other examples.

The embodiments of the present disclosure are described above with reference to the accompanying drawings, but the present disclosure is not limited to the specific implementations described above, and the specific embodiments described above are merely illustrative but not restrictive. Under the inspiration of the present disclosure, those of ordinary skills in the art can make many forms without departing from the intention of the present disclosure and the protection scope of the claims, which are all within the protection of the present disclosure.

## Claims

1. A method for controlling an automatic cleaning device, **characterized in that** the automatic cleaning device comprises a machine body and a cleaning assembly arranged at a rear of the machine body, at least part of the cleaning assembly protrudes from an outer edge of the machine body, and the method comprises:
when the automatic cleaning device moves into a preset range of an obstacle and performs direction switching, performing supplementary cleaning movement once after each rotation of the automatic cleaning device by a preset angle until the automatic cleaning device completes the direction switching, wherein
the supplementary cleaning movement comprises backward movement and forward movement.

2. The method according to claim 1, wherein the supplementary cleaning movement comprises:
controlling the automatic cleaning device to perform the backward movement from a first position and to stop when the automatic cleaning device reaches a second position corresponding to the obstacle, wherein the first position is a position where the automatic cleaning device is located after the automatic cleaning device rotates by the preset angle; and
controlling the automatic cleaning device to perform the forward movement from the second position and to stop when the automatic cleaning device reaches the first position.

3. The method according to claim 2, wherein the supplementary cleaning movement further comprises:
controlling the automatic cleaning device to stop at the second position for a preset duration.

4. The method according to claim 2, wherein a method for determining that the automatic cleaning device reaches the second position comprises:
determining whether the automatic cleaning device reaches the second position based on a signal change of a driving component of the cleaning assembly, wherein the signal change occurs in the driving component when the cleaning assembly comes into contact with the obstacle.

5. The method according to claim 2, wherein the automatic cleaning device is provided with a sensing apparatus, and a method for determining that the automatic cleaning device reaches the second position comprises:
determining whether the automatic cleaning device reaches the second position based on a sensing signal of the sensing apparatus; wherein
the sensing apparatus comprises at least one of a ranging sensor, a collision sensor and an acceleration sensor.

6. The method according to claim 2, wherein the controlling the automatic cleaning device to perform the forward movement from the second position and to stop when the automatic cleaning device reaches the first position comprises:
controlling the automatic cleaning device to perform the forward movement from the second position along a path of the backward movement and to stop when the automatic cleaning device reaches the first position.

7. The method according to any one of claims 1 to 6, further comprising:
determining a magnitude of the preset angle based on a cleanliness grade of the automatic cleaning device for the preset range of the obstacle, wherein
the higher the cleanliness grade is, the smaller the preset angle is.

8. An apparatus for controlling an automatic cleaning device, **characterized in that** the automatic cleaning device comprises a machine body and a cleaning assembly arranged at a rear of the machine body, at least part of the cleaning assembly protrudes from an outer edge of the machine body; and the apparatus comprises:
a control module, configured to control, when the automatic cleaning device moves into a preset range of an obstacle and performs direction switching, the automatic cleaning device to perform supplementary cleaning movement once after each rotation of the automatic cleaning device by a preset angle until the automatic cleaning device completes the directional switching, wherein
the supplementary cleaning movement comprises backward movement and forward movement.

9. The apparatus according to claim 8, wherein the supplementary cleaning movement performed by the automatic cleaning device under control of the control module comprises:
controlling the automatic cleaning device to perform the backward movement from a first position and to stop when the automatic cleaning device reaches a second position corresponding to the obstacle, wherein the first position is a position where the automatic cleaning device is located after the automatic cleaning device rotates by the preset angle; and
controlling the automatic cleaning device to perform the forward movement from the second position and to stop when the automatic cleaning device reaches the first position.

10. The apparatus according to claim 9, wherein the supplementary cleaning movement performed by the automatic cleaning device under the control of the control module further comprises:
controlling the automatic cleaning device to stop at the second position for a preset duration.

11. The apparatus according to claim 9, wherein a method for determining, by the control module, that the automatic cleaning device reaches the second position comprises:
determining whether the automatic cleaning device reaches the second position based on a signal change of a driving component of the cleaning assembly, wherein the signal change occurs in the driving component when the cleaning assembly comes into contact with the obstacle.

12. The apparatus according to claim 9, wherein the automatic cleaning device is provided with a sensing apparatus, and a method for determining, by the control module, that the automatic cleaning device reaches the second position comprises:
determining whether the automatic cleaning device reaches the second position based on a sensing signal of the sensing apparatus, wherein
the sensing apparatus comprises at least one of a ranging sensor, a collision sensor and an acceleration sensor.

13. An automatic cleaning device, **characterized by** comprising:
a machine body;
a cleaning assembly, arranged at a rear of the machine body, wherein at least part of the cleaning assembly protrudes from an outer edge of the machine body;
a memory, arranged on the machine body, wherein the memory stores a program or an instruction; and
a processor, arranged on the machine body, wherein the processor, when executing the program or the instruction, implements steps of the method for controlling the automatic cleaning device according to any one of claims 1 to 7.

14. The device according to claim 13, wherein
the cleaning assembly comprises at least one cleaning element rotatable relative to the machine body, and at least part of the cleaning element protrudes from the outer edge of the machine body.

15. The device according to claim 14, wherein
the cleaning element comprises two cleaning elements, and the two cleaning elements are arranged left and right in an advancing direction of the machine body.

16. A readable storage medium, storing a program or an instruction, **characterized in that** the program or the instruction, when executed by a processor, implements steps of the method for controlling the automatic cleaning device according to any one of claims 1 to 7.
